# EUROPEAN PATENT APPLICATION

(11) **EP 4 797 473 A1**
(43) Date of publication of application: **26.08.2026**
(21) Application number: 26153101.6
(22) Date of filing: 21.01.2026
(51) Int. Cl.: H02H 3/087, H02H 9/02, H02M 1/32

(54) **BIDIRECTIONAL CURRENT LIMITING CIRCUITS**

(30) Priority: 21.02.2025 GB 202502552
(71) Applicant: Rolls-Royce plc, London N1 9FX (GB)
(72) Inventor: Gajanayake, Chandana J, Derby, DE24 8BJ (GB); Mohamed Halick, Mohamed Sathik, Derby, DE24 8BJ (GB); Trainer, David R, Derby, DE24 8BJ (GB); Valappil, Muneer, Derby, DE24 8BJ (GB); Kotturu, Janardhana, Derby, DE24 8BJ (GB)
(74) Representative: Rolls-Royce plc

(57) **Abstract**

The disclosure relates to bidirectional current limiting circuits for use in aircraft electric power distribution system and methods for operating such bidirectional current limiters. A bidirectional current limiting circuit (400) comprises first and second parallel current paths (401, 402) connected between first and second terminals (403, 404), the first current path (401) comprising a first current limiting device (405) connected in series with a measurement inductor (406), the second current path (402) comprising a damping resistor (407) in series with a second current limiting device (408), wherein the first current limiting device is a first JFET (405), the circuit (400) further comprising a controller (409) connected to a gate of the first JFET (405), the controller (409) connected to receive a voltage measurement across the measurement inductor (406) and provide a first gate voltage to the first JFET (405) to restrict current through the first path (401) if the voltage measurement exceeds a voltage threshold.

## Description

### CROSS REFERENCE TO RELATED APPLICATIONS

This represents the first application directed towards the subject-matter.

### FIELD

The disclosure relates to bidirectional current limiting circuits for use in aircraft electric power distribution system and methods for operating such bidirectional current limiting circuits.

### BACKGROUND

With increasing application of electrical systems in aircraft and a progression towards full electric and hybrid aircraft propulsion systems, the use of energy storage systems in combination with DC electric power distribution has gained increased use. Fault protection and reliability are important factors in such systems. With electrical power in such systems being provided by power electronics converters in combination with DC electrical loads and large DC capacitors, in the event of a DC short circuit it may be difficult to prevent large fault currents from discharging into a fault location, which may pose a safety issue for the electrical load and the power electronics converters. A further problem in aircraft applications is that some loading branches may need to have traditional protection devices, which may not be easily replaced.

Traditionally, electrical machines are designed with high impedance to allow for fault current management. This may, however, be limited in protecting power electronics used in rectification. With increased penetration of battery energy storage system making this even more demanding, DC/DC converters may be employed. Both rectifiers and DC/DC converters require large DC link capacitors, sudden discharge of which during a short circuit event can create high currents that need to be dissipated until damped within the network. High transient currents may damage diodes of rectifiers and other components in the distribution network. To enable protection during a short circuit event, it is required to hold a fault current for a sustained period in some applications.

### SUMMARY

According to a first aspect there is provided a bidirectional current limiting circuit comprising first and second parallel current paths connected between first and second terminals, the first current path comprising a first current limiting device connected in series with a measurement inductor, the second current path comprising a damping resistor in series with a second current limiting device, wherein the first current limiting device is a first JFET, the circuit further comprising a controller connected to a gate of the first JFET, the controller connected to receive a voltage measurement across the measurement inductor and provide a first gate voltage to the first JFET to restrict current through the first path if the voltage measurement exceeds a voltage threshold.

The second current path may be connected between the first terminal and an intermediate node in the first current path between the first JFET and the measurement inductor.

The second current limiting device may be a bidirectional transient voltage suppressor. The bidirectional transient voltage suppressor may comprise a pair of opposed avalanche diodes. The bidirectional transient voltage suppressor may alternatively comprise a voltage-dependent resistor.

The second current limiting device may be a second JFET. The controller may be configured to provide a second gate voltage to the second JFET to allow current through the second path if the voltage measurement exceeds the voltage threshold.

The controller may be configured to apply a third gate voltage to the first JFET to allow current through the first path if the voltage measurement does not exceed the voltage threshold.

The bidirectional current limiting circuit may further comprise a mechanical contactor in the first path, wherein the controller is configured to operate the mechanical contactor to enable or disable current flow through the circuit.

The first JFET may be a n-channel JFET.

According to a second aspect there is provided an electrical power system comprising:
a power electronics converter connected between an electrical power source and an electrical load; and
a bidirectional current limiting circuit according to the first aspect connected between the power electronics converter and the electrical load or between the power electronics converter and the electrical power source.

According to a third aspect there is provided a method of operating a bidirectional current limiting circuit comprising first and second parallel current paths connected between first and second terminals, the first current path comprising a first current limiting device connected in series with a measurement inductor, the second current path comprising a damping resistor in series with a second current limiting device, wherein the first current limiting device is a first JFET, the circuit further comprising a controller connected to a gate of the first JFET and configured to receive a voltage measurement across the measurement inductor, the method comprising the controller monitoring the voltage measurement across the measurement inductor and providing a first gate voltage to the first JFET to restrict current through the first path if the voltage measurement exceeds a voltage threshold.

The second current limiting device may be a second JFET and the controller may provide a second gate voltage to the second JFET to allow current through the second path if the voltage measurement exceeds the voltage threshold.

The controller may apply a third gate voltage to the first JFET to allow current through the first current path if the voltage measurement does not exceed the voltage threshold.

A mechanical contactor may be provided in the first current path and the controller may operate the mechanical contactor to enable or disable current flow through the circuit.

Other features relating to the first aspect may also apply in relation to the second and third aspects.

### BRIEF DESCRIPTION OF THE DRAWINGS

Embodiments will now be described by way of example only with reference to the accompanying drawings, in which:
FIG. 1 is a schematic diagram of an example electrical power distribution system for an aircraft;
FIG. 2 is a schematic diagram of an example electrical power system;
FIG. 3 is a schematic diagram of an example passively activated bidirectional current limiting circuit for an electrical power system;
FIG. 4 is a schematic diagram of an example active current limiting circuit for an electrical power system;
FIG. 5 is a schematic diagram of an alternative example active current limiting circuit for an electrical power system; and
FIG. 6 is a schematic diagram of a further alternative example active current limiting circuit for an electrical power system.

### DETAILED DESCRIPTION

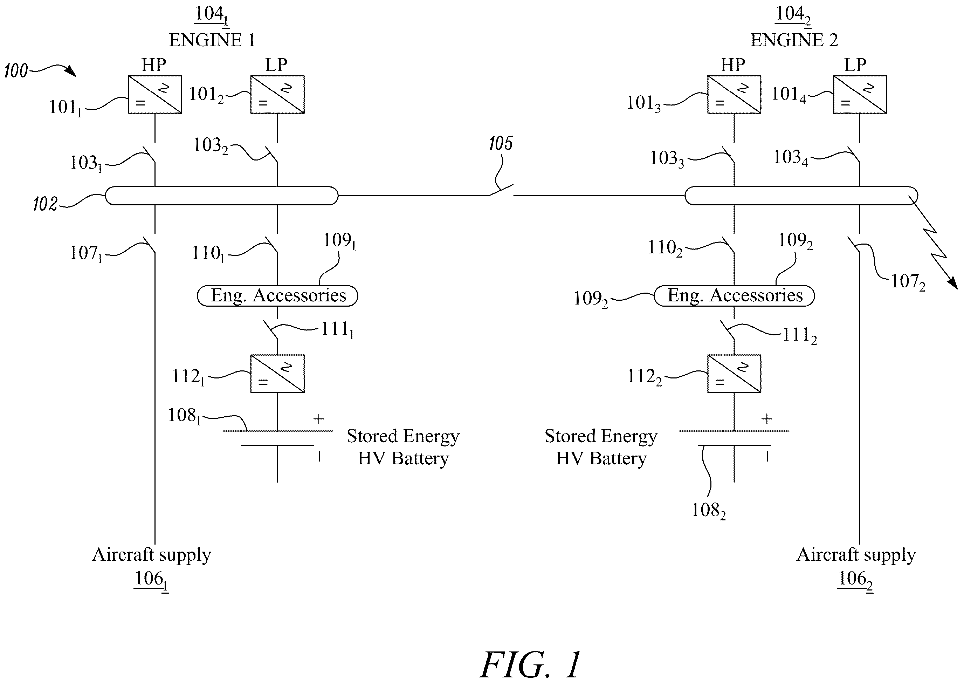

FIG. 1 illustrates an example electrical power distribution system 100 for an aircraft. The system 100 comprises AC:DC converters 101₁₋₄ connected between first and second engines and a DC distribution bus 102. In this example, an AC:DC converter is connected between the DC distribution bus 102 and an electrical machine connected to each of an HP and LP spool of each engine. Each converter is connectable to the DC distribution bus 102 via a respective contactor 103₁₋₄. The DC distribution bus 102 may be separated into first and second sides 104₁, 104₂ by a contactor 105, allowing each side to operate independently or in combination. Each side provides DC power to an aircraft electrical supply 106₁, 106₂, which provides electrical power to various onboard electrical systems. Each side may be isolated from the aircraft supply by further contactors 107_{1, 2}. Each side of the DC distribution bus 102 is also connectable to a battery 108_{1,2} and may also be connected to one or more engine accessories 109_{1,2}, (e.g. other electrical loads such as oil or fuel pumps or vacuum solenoid valves), connections to the batteries 108_{1,2} being made via further contactors 110_{1,2}, 111_{1,2} and DC:DC converters 112_{1,2}. Electrical power can thereby be extracted from the DC distribution bus 102 and stored in either or both of the batteries 108_{1,2} or provided to the DC distribution bus 102 from either or both of the batteries 108_{1,2} via the DC:DC converters 112_{1,2}.

In the electrical power distribution system 100 of FIG. 1, because power can flow in either direction to and from the batteries 108₁, 108₂ and a short circuit on one side of the system 100 may affect the other side, current limiting devices with a bidirectional capability are required.

With electric aircraft DC distribution systems having multiple sources and loads connected in distribution network, each load will need to be protected using traditional protection devices that will be required to sustain a continued fault current to clear the fault condition under defined critical operating conditions. If the system is equipped with high power rated battery energy storage and/or electrical machines with lower impedance, large fault currents may be generated, which can damage the power converters as well as other components in distribution system. A fault current limitation function is therefore required.

Solid state power controllers enable fast protection in the event of faults but may not be able to provide galvanic isolation and may not be able to limit the fault current. Various solutions have been developed for providing current limiting capabilities, for example as disclosed in US 2023/136376 A, US 2023/134788 A, US 2023/140274 A, US 2023/137501 A, US 2022/281611 A, US 2022/281609 A, US 2022/281607 A, the contents of which are incorporated herein by reference.

Current limiting devices (CLDs) are known for use in high power applications to provide current limiting capabilities in the event of a fault current. CLDs may comprise silicon or silicon carbide JFETs (Junction Field Effect Transistors), configured as 2-terminal devices which saturate at a near constant current level. Such devices may be referred to as "constant-current" diodes. These devices may be used to limit current in the event of an electrical system fault or to limit an inrush current when charging a capacitor. In their current limiting mode of operation, a CLD develops a voltage that opposes the flow of current in its saturation region.

One problem with JFET-based current limiting devices is in high voltage and high current applications a number of devices are required to be connected in parallel. Such devices are physically large and this may put a practical limitation on potential adoption due to increased size and weight. Another limitation is that a steady state power loss is incurred due to a requirement to have a series connected resistor to bias the JFET gate.

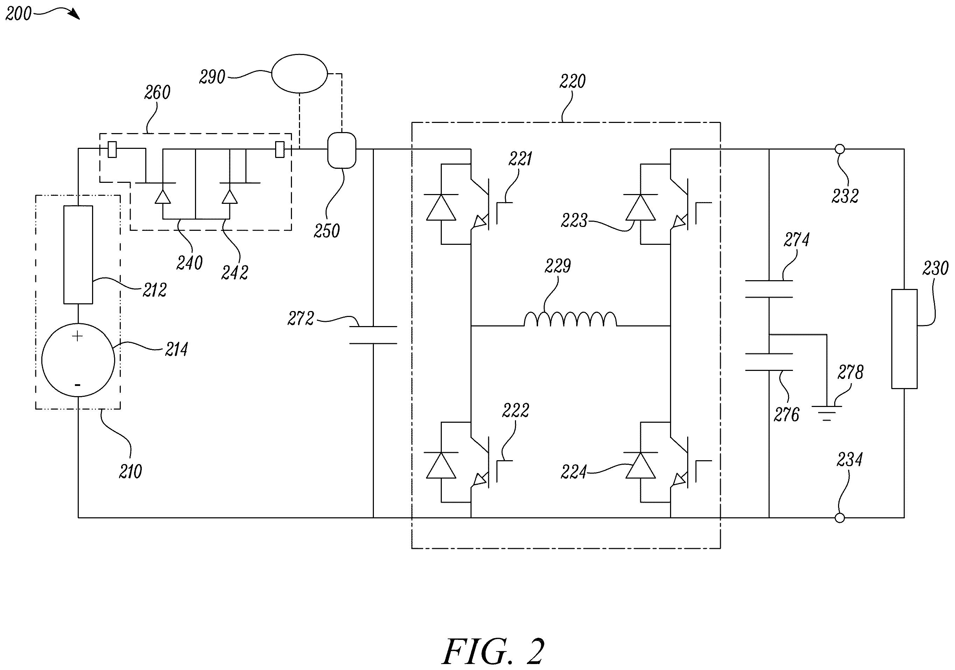

An example electrical power system 200 is illustrated in FIG. 2, in which a bidirectional current limiting device 260 is provided between an electrical power source 210 and a DC:DC power electronics converter 220. The electrical power source 210 is represented by a voltage source 214 and a resistor 212. A first DC capacitor 272 is connected across the power electronics converter 220 at the electrical power source side. The power electronics converter 220 is connected to an electrical network 230 connected between terminals 232, 234. Second and third DC capacitors 274, 276 are connected between the terminals 232, 234 and a ground connection 278. The power electronics converter 220 comprises first, second, third and fourth transistors 221, 222, 223, 224 and an inductor coil 229.

The bidirectional current limiting device 260 comprises a pair of JFETs arranged as current limiting diodes 240, 242. A controllable circuit interruption device 250 is connected between the bidirectional current limiting device 260 and the power electronics converter 220, operation of the circuit interruption device 250 being controlled by a controller 290.

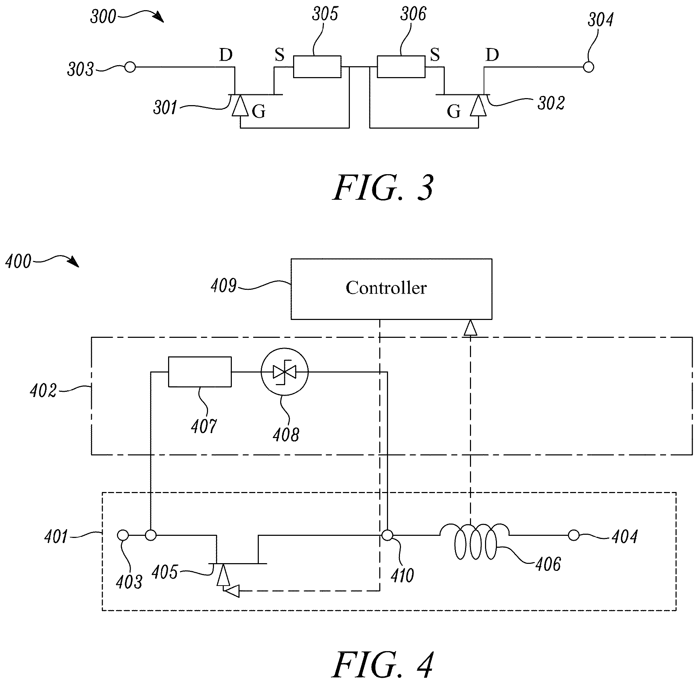

An alternative representation of a bidirectional current limiting device 300 of the type used in the system 200 of FIG. 2 is illustrated in FIG. 3. The bidirectional current limiting device 300 comprises first and second diode-connected JFETs 301, 302 connected between first and second terminals 303, 304. A resistor 305, 306 is connected between source and gate connections of each JFET 301, 302. The device 300 enables current to flow in either direction between the first and second terminals 303, 304. Once the current exceeds a threshold level, which is defined by the value of the resistors 305, 306, one of the JFETs 301, 302 operates to restrict the flow of current through the device.

One drawback of JFET based passive current limiting devices is, when used in high voltage and high current applications, a number of devices may need to be connected in parallel, which puts a practical limitation on potential adoption of the technology. Another limitation is steady state power loss due to the requirement to have series connected resistors 305, 306 to bias each JFET gate. For a bi-directional device two such resistors are required, which further increases the steady state power loss.

An example bidirectional current limiting circuit 400 that addresses the above problems is illustrated in FIG. 4. The bidirectional current limiting circuit 400 comprises first and second parallel current paths 401, 402 that are connected between first and second terminals 403, 404. The first current path 401 comprises a first current limiting device 405 connected in series with a measurement inductor 406. The second current path 402 comprises a damping resistor 407 connected in series with a second current limiting device 408. The second current path 402 is connected between the first terminal 403 and an intermediate node 410 in the first current path 401 between the first current limiting device and the measurement inductor 406. A controller 409 is connected to receive a voltage measurement across the measurement inductor 406 and provide a gate voltage to the first current limiting device 405 to restrict current through the first path 401 if the voltage measurement exceeds a voltage threshold.

The first current limiting device is a JFET 405, which in this example is an n-channel JFET. Multiple such JFETs may be connected in parallel to provide a higher current carrying capacity for the circuit 400. By applying a gate voltage to the JFET with the controller 409, the JFET 405 can be controlled in an OFF state where current is allowed to flow through the JFET 405 and an ON state in which current flow is restricted. By monitoring a voltage across the measurement inductor 406, the controller 409 is able to identify the presence of a short circuit fault due to this causing a current spike through the circuit 400. Once this fault is detected, the controller 409 applies a pre-determined voltage (in this case a negative voltage) to the gate of the JFET 405 to limit current flow through the first current path 401. This triggers the second current limiting device 408 in the second current path 402, which in this example is a transient voltage suppressor (TVS), which helps to carry the large transient current. The series connected resistor 407 reduces the current magnitude and assists in dissipating the transient current.

The TVS 408 may, as illustrated in FIG. 4, comprise a pair of opposed avalanche diodes. In alternative examples, the TVS 408 may comprise a voltage-dependent resistor (varistor), which will tend to react more slowly but may be preferable in some applications.

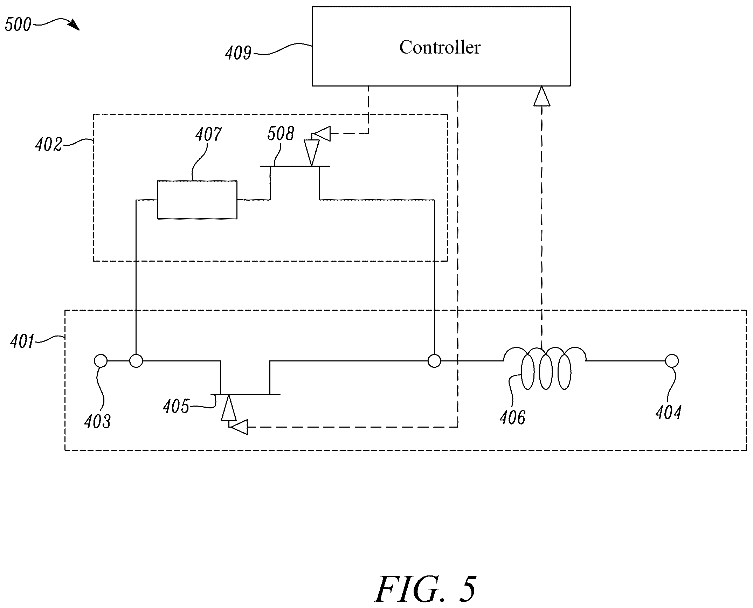

In an alternative example bidirectional current limiting circuit 500 illustrated in FIG. 5, the JFET 405 is a first JFET and the second current limiting device is a second JFET 508. Operation of the circuit 500 may be similar to that of the circuit 400 of FIG. 4, in that the first JFET 405 is operated by the controller 409 applying a gate voltage to switch the first JFET 405 between an OFF, or active, state in which current is permitted to flow through the first current path and an ON state in which current flow through the first current path 401 is restricted once a fault is detected. In this example, the controller 409 is further configured to activate the second current path 402 to allow the second current path 402 to carry the fault current. The second JFET 508 may be designed to carry the required fault current or, in alternative examples, a plurality of second JFETs 508 may be connected in parallel in the second current path 402 to carry the fault current, each of which may have an associated damping resistor 407 connected in series.

Once the fault is cleared or after a pre-determined time has elapsed, the first JFET 405 may turn be turned OFF by the controller, i.e. changing the applied gate voltage from a first gate voltage that causes the first JFET to restrict current flow to a second gate voltage that allows current flow. The controller 409 may additionally or alternatively take current and temperature measurements to determine when the fault is cleared. Other short circuit detection methods may alternatively be used such as a measurement of voltage across the first JFET.

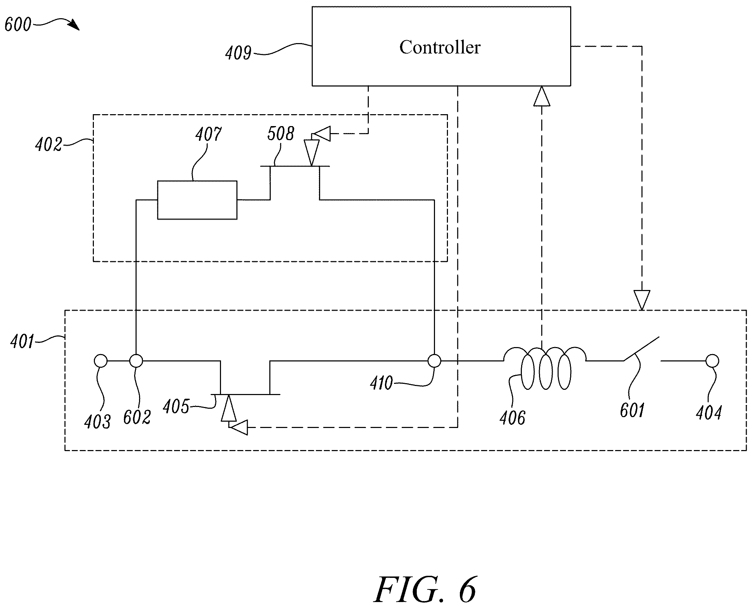

In a further example bidirectional current limiting circuit 600 illustrated in FIG. 6, a mechanical contactor 601 is provided in the first current path 401, which in this example is connected between the second terminal 404 and the measurement inductor 406. The mechanical contactor 601 may alternatively be connected between the intermediate node 410 and the measurement inductor 406 or between the first terminal 403 and a node 602 connecting the first JFET and the damping resistor 407. The mechanical contactor 601 can be operated by the controller to provide galvanic isolation. The mechanical contactor 601 can also reduce the risk associated with the first JFET 405 being a normally ON device at power up, if the contactor 601 is configured to be normally OFF and first JFET 405 is normally ON. Before a power supply to the controller 409 is provided, the first JFET 405 (and second JFET 508 in this example) is in a conducting stat, which may not be a desirable condition in some applications. The series connected mechanical contactor 601 thereby reduces the risk of making electrical connection through the circuit 600 at start-up. Once the controller 409 is powered up, both JFETs 405, 508 can be set to the OFF state and the mechanical contactor 601 can then be turned ON safely to make the electrical connection. The second current path may be controlled by switching the resistor to control the flow of current and pre charge the bus before the first JFET 405 is turned ON to allow full conduction. This arrangement eliminates the need for an auxiliary contactor and a precharge resistor that may otherwise be used. Also, upon shut down of the circuit, the current limiting function of the second current path can be used to safely limit current through the device 600 before being brought down to zero, after which the mechanical contactor 601 can be turned off. The mechanical contactor 601 does not thereby need to have a high arc management capability, allowing the mechanical contactor 601 to be of more simple construction. With the second current path 402 being controlled with the second JFET 508, this current limiting function can be achieved in both directional without needing additional switches or devices, which reduces the component count significantly compared to existing solutions.

The JFETs acting as active current limiting devices in the example circuit disclosed herein may be single devices, compared with existing passively activated current limiting device that require at least two JFETs connected in series in common source or common drain configuration with passive resistors for biasing. The power loss in the proposed current limiting devices disclosed herein may be significantly lower. A lower cost due to a reduced component count may also result.

The proposed bidirectional current limiting circuits may be operated using analog or digital control.

An increased fault current handling capability may be achieved due to the use of a second current conduction path.

Operating the current limiting circuit without the controller may reduce the steady state power used during normal operating conditions.

The JFETs in each of the bidirectional current limiting circuits 400, 500, 600 disclosed herein may for example be SiC JFETs, which enable high current flows in high power applications.

The bidirectional current limiting circuit 400, 500, 600 described above may be used in an electrical power system 200 of the type described above, with the bidirectional current limiting circuit 400, 500, 600 replacing the bidirectional current limiting device 260 and controller 290. The bidirectional current limiting circuit 400, 500, 600 may be connected between the electrical power source 230 and the power electronics converter 220 as shown in FIG. 2 or between the electrical load 210 and the power electronics converter 220.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A bidirectional current limiting circuit (400, 500, 600) comprising first and second parallel current paths (401, 402) connected between first and second terminals (403, 404), the first current path (401) comprising a first current limiting device (405) connected in series with a measurement inductor (406), the second current path (402) comprising a damping resistor (407) in series with a second current limiting device (408, 508), wherein the first current limiting device is a first **JFET** (405), the circuit (400) further comprising a controller (409) connected to a gate of the first **JFET** (405), the controller (409) connected to receive a voltage measurement across the measurement inductor (406) and provide a first gate voltage to the first **JFET** (405) to restrict current through the first path (401) if the voltage measurement exceeds a voltage threshold.

2. The bidirectional current limiting circuit (400) of claim 1, wherein the second current path (402) is connected between the first terminal (403) and an intermediate node (410) in the first current path (401) between the first JFET (405) and the measurement inductor (406).

3. The bidirectional current limiting circuit (400) of claim 1 or claim 2, wherein the second current limiting device is a bidirectional transient voltage suppressor (408).

4. The bidirectional current limiting circuit (400) of claim 3, wherein the bidirectional transient voltage suppressor (408) comprises a pair of opposed avalanche diodes.

5. The bidirectional current limiting circuit (400) of claim 3, wherein the bidirectional transient voltage suppressor (408) comprises a voltage-dependent resistor.

6. The bidirectional current limiting circuit (500) of claim 1 or claim 2, wherein the second current limiting device is a second JFET (508).

7. The bidirectional current limiting circuit (500) of claim 6, wherein the controller (409) is configured to provide a second gate voltage to the second JFET (508) to allow current through the second path (402) if the voltage measurement exceeds the voltage threshold.

8. The bidirectional current limiting circuit (400, 500, 600) of any preceding claim, wherein the controller (409) is configured to apply a third gate voltage to the first JFET (405) to allow current through the first path if the voltage measurement does not exceed the voltage threshold.

9. The bidirectional current limiting circuit (600) of any preceding claim further comprising a mechanical contactor (601) in the first path, wherein the controller (409) is configured to operate the mechanical contactor (601) to enable or disable current flow through the circuit (600).

10. The bidirectional current limiting circuit (400, 500, 600) of any preceding claim, wherein the first JFET (405) is a n-channel JFET.

11. An electrical power system (200) comprising:
a power electronics converter (220) connected between an electrical power source (210) and an electrical load (230); and
a bidirectional current limiting circuit (400, 500, 600) according to any preceding claim connected between the power electronics converter (220) and the electrical load (210) or between the power electronics converter (220) and the electrical power source (230).

12. A method of operating a bidirectional current limiting circuit (400, 500, 600) comprising first and second parallel current paths (401, 402) connected between first and second terminals (403, 404), the first current path (401) comprising a first current limiting device (405) connected in series with a measurement inductor (406), the second current path (402) comprising a damping resistor (407) in series with a second current limiting device (408, 508), wherein the first current limiting device is a first JFET (405), the circuit (400) further comprising a controller (409) connected to a gate of the first JFET (405) and configured to receive a voltage measurement across the measurement inductor (406), the method comprising the controller (409) monitoring the voltage measurement across the measurement inductor (406) and providing a first gate voltage to the first JFET (405) to restrict current through the first path (401) if the voltage measurement exceeds a voltage threshold.

13. The method of claim 12, wherein the second current limiting device is a second JFET (508) and the controller (409) provides a second gate voltage to the second JFET (508) to allow current through the second path (402) if the voltage measurement exceeds the voltage threshold.

14. The method of claim 12 or claim 13, wherein the controller (409) applies a third gate voltage to the first JFET (405) to allow current through the first current path (401) if the voltage measurement does not exceed the voltage threshold.

15. The method of any one of claims 12 to 14 wherein a mechanical contactor (601) is provided in the first current path (401) and the controller (409) operates the mechanical contactor (601) to enable or disable current flow through the circuit (600).
